# EUROPÄISCHE PATENTSCHRIFT

(11) **EP 3 304 790 B1**
(45) Veröffentlichungstag und Bekanntmachung des Hinweises auf die Patenterteilung: **09.03.2022**
(21) Anmeldenummer: 16727185.7
(22) Anmeldetag: 03.06.2016
(51) Int. Cl.: H04L 1/22, H04L 1/18, H04L 1/04, H04L 1/06, H04L 12/40

(54) **VERFAHREN FÜR EIN REDUNDANTES ÜBERTRAGUNGSSYSTEM MIT PRP UND ZWISCHENSPEICHERUNG VON DATENPAKETEN**
METHOD FOR A REDUNDANT TRANSMISSION SYSTEM WITH PRP AND TEMPORARY STORAGE OF DATA PACKETS
PROCÉDÉ POUR UN SYSTÈME DE TRANSMISSION REDONDANT À PRP ET STOCKAGE INTERMÉDIAIRE DE PAQUETS DE DONNÉES

(30) Priorität: 03.06.2015 DE 102015210307
(43) Veröffentlichungstag der Anmeldung: 11.04.2018
(73) Patentinhaber: Hirschmann Automation and Control GmbH, 72654 Neckartenzlingen (DE)
(72) Erfinder: HEER, Tobias, 72636 Frickenhausen (DE); KLIMMEK, Valentin, 72525 Münsingen (DE)
(74) Vertreter: Greif, Thomas
(86) Internationale Anmeldenummer: PCT/EP2016/062672
(87) Internationale Veröffentlichungsnummer: WO 2016/193443

(56) Entgegenhaltungen:
- EP-A1- 0 384 936
- EP-A1- 0 507 022
- WO-A1-2014/076354
- US-A1- 2014 086 136
- MARKUS RENTSCHLER ET AL: "Towards a reliable parallel redundant WLAN black channel", FACTORY COMMUNICATION SYSTEMS (WFCS), 2012 9TH IEEE INTERNATIONAL WORKSHOP ON, IEEE, 21. Mai 2012 (2012-05-21), Seiten 255-264, XP032204362, DOI: 10.1109/WFCS.2012.6242573 ISBN: 978-1-4673-0693-5

## Beschreibung

Die Erfindung betrifft ein Verfahren zum Betreiben eines Übertragungssystems gemäß den Merkmalen des Patentanspruches 1.

Solche bekannten Übertragungssysteme finden Anwendung in sicherheitskritischen Fällen bei verfahrenstechnischen Anlagen, stationären oder mobilen Arbeitseinrichtungen, beispielsweise bei Arbeitsfahrzeugen wie Krane oder dergleichen.

Es ist dabei wichtig, dass Daten zuverlässig von dem ersten Netzwerk zu dem zumindest weiteren Netzwerk übertragen werden. Eine solche sicherheitskritische Datenübertragung ist besonders dann wichtig, wenn die Daten über eine drahtlose Übertragungsstrecke übertragen werden. Hierzu hat es schon eine Verbesserung derart gegeben, dass nicht nur eine Übertragungsstrecke, sondern zumindest zwei, vorzugsweise genau zwei Übertragungsstrecken für diese Sicherheitsanwendung (auch Safety-Anwendung genannt) eingesetzt werden. Eine weitere Verbesserung dieser redundanten Datenübertragung hat dadurch stattgefunden, dass sie drahtlos, das heißt über Funk oder Licht, mittels des PRP (Parallel Redundancy Protocol), welches ein Layer-2-Redundanzverfahren ist, welches von höheren Schichten unabhängig ist und sich vor allen Dingen für Echtzeit-Ethernet-Mechanismen eignet, eingesetzt wird.

Unter Sicherheitsaspekten arbeitet ein solches Übertragungssystem zwar schon zufriedenstellend, weil Redundanz der beiden Übertragungsstrecken gegeben ist. So kann beispielsweise dann, wenn eine drahtlose Übertragungsstrecke gestört ist oder ausfällt, die zumindest zweite Übertragungsstrecke genutzt werden, um die Datenübertragung von dem ersten zu dem weiteren Netzwerk sicherzustellen.

Dabei ist jedoch nicht auszuschließen, dass trotz dieser Redundanz die Datenübertragung zwischen den beiden Netzwerken unter sicherheitskritischen Aspekten in unzulässiger Weise gestört wird.

Der Erfindung liegt daher die Aufgabe zugrunde, ein Verfahren zum Betreiben eines Übertragungssystems unter sicherheitskritischen Aspekten deutlich zu verbessern.

Diese Aufgabe wird durch die Merkmale der beiden unabhängigen Patentansprüche gelöst.

Erfindungsgemäß ist vorgesehen, dass die Datenpakete nach ihrer Übertragung über die zumindest zwei Übertragungsstrecken in einem Speicher zwischengespeichert werden.

Der Datenstrom, der von dem ersten Netzwerk zu dem zumindest weiterem Netzwerk übertragen werden soll, wird zunächst in an sich bekannter Weise aufgeteilt und über die beiden gleichartigen oder voneinander unterschiedlichen Übertragungsstrecken (unterschiedlich z. B. durch zeitversetztes Übertragen) drahtlos übertragen. Anschließend werden die beiden getrennt voneinander übertragenen Daten (Datenströme in Form von Datenpaketen) über die Separiermittel wieder zusammen geführt und als im Idealfall ursprünglicher Datenstrom in das zumindest eine weitere Netzwerk eingespeist. Da es bei der Übertragung vorkommen kann, dass Datenpakete (also zumindest ein Datenpaket, gegebenenfalls aber auch mehrere Datenpakete) in Folge einer Störung zumindest einer Übertragungsstrecke, beider oder mehrerer Übertragungsstrecken, fehlerhaft oder gar nicht zu den Separiermitteln gelangen können, werden die Datenpakete, die über die Übertragungsstrecken übertragen und zu dem Separiermitteln gelangt sind, zwischengespeichert. Dies bietet in vorteilhafter Weise die Möglichkeit, z. B. ein Datenpaket (oder mehrere Datenpakete), die fehlerfrei über die eine Übertragungsstrecke übertragen worden sind, aus dem Speicher zu verwenden, um das korrespondierende Datenpaket (oder die korrespondierenden Datenpakete), die gar nicht oder fehlerhaft über die weitere Übertragungsstrecke übertragen worden sind und somit nicht oder fehlerhaft zu den Separiermitteln gelangt sind, durch die zwischengespeicherten fehlerfreien Datenpakete zu ersetzen. Dabei wird davon ausgegangen, dass z. B. ein Datenpaket fehlerfrei über die eine Übertragungsstrecke übertragen worden ist und zwischengespeichert wird und ein korrespondierendes Datenpaket über die weitere Übertragungsstrecke in der falschen Reihenfolge oder gar nicht oder fehlerbehaftet übertragen worden ist.

Daher kann in vorteilhafter Weise das fehlerfrei übertragene Datenpaket der einen Übertragungsstrecke in dem Datenstrom der anderen Übertragungsstrecke das fehlerhafte oder gar nicht übertragene Datenpaket ersetzen, indem es aus dem Zwischenspeicher genommen wird, oder das Datenpaket dieser Übertragungsstrecke, das in der falschen Reihenfolge übertragen wurde, kann in der richtigen Reihenfolge (also in der richtigen Position) in den an das weitere Netzwerk weiterzuleitenden Datenstrom eingesetzt werden.

Insgesamt bietet also das erfindungsgemäße Verfahren den entscheidenden Vorteil, dass der ursprüngliche Datenstrom, der von den Verdopplungsmitteln aufgeteilt und über die beiden Übertragungsstrecken geschickt wurde, wieder als korrekter Datenstrom von den Separiermitteln an das weitere Netzwerk weitergeleitet werden kann, indem die beiden übertragenen Datenströme untersucht werden und dann, wenn festgestellt wurde, dass ein Datenstrom über die eine Übertragungsstrecke oder die andere oder sogar die Datenströme über beide Übertragungsstrecken nicht dem ursprünglichen Datenstrom entsprechen, eine Korrektur der übertragenen Datenströme aus den zwischengespeicherten Datenpaketen vorgenommen werden kann. So ist es von besonderen Vorteil, dass dann, wenn in einem übertragenen Datenstrom Datenpakete nicht in der richtigen Reihenfolge übertragen worden sind oder Datenpakete gar nicht übertragen wurden, diese Datenpakete, die über die weitere Übertragungsstrecke übertragen worden sind, in dem Speicher zwischen zu speichern und zu entnehmen, um den an das weitere Netzwerk weiterzuleitenden Datenstrom zu korrigieren. Dies findet insbesondere dadurch statt, dass ein zwischengespeichertes Datenpaket des einen Datenstromes ein fehlendes Datenpaket oder ein in einer falschen Reihenfolge übertragenes Datenpaket des anderen über die weitere Übertragungsstrecke übertragenen Datenstromes eingesetzt (im Falle des Fehlens) oder in der richtigen Reihenfolge (im Falle der Übertragung der falschen Reihenfolge der Datenpakete) ersetzt wird. In einer ersten weiteren vorteilhaften Ausgestaltung der Erfindung ist vorgesehen, dass für den Fall, dass auf einer Übertragungsstrecke zumindest ein Datenpaket verloren gegangen ist, zumindest ein entsprechendes Datenpaket, welches fehlerfrei auf der zumindest einen weiteren Übertragungsstrecke übertragen und zwischengespeichert worden ist, dieses zumindest eine verloren gegangene Datenpaket in dem weiterzuleitenden Datenstrom ersetzt. Dies hat den Vorteil, dass davon ausgegangen wird, dass ein Datenpaket auf der einen Übertragungsstrecke verloren geht, durch ein korrespondierendes Datenpaket, welches fehlerfrei über die andere Übertragungsstrecke übertragen worden ist, durch Entnahme aus dem Zwischenspeicher in den weiterzuleitenden Datenstrom eingesetzt werden kann. Dadurch entspricht der ursprüngliche Datenstrom, der über die beiden Übertragungsstrecken übertragen werden soll, nach Einsatz des zwischengespeicherten Datenpaketes in den weiterzuleitenden Datenstrom dieser fehlerfrei ist und dem ursprünglichen Datenstrom entspricht.

In einer weiteren Ausgestaltung der Erfindung ist vorgesehen, dass für den Fall, dass auf einer Übertragungsstrecke zumindest ein Datenpaket nicht in der richtigen Reihenfolge angekommen ist, dieses zumindest eine in der falschen Reihenfolge übertragene Datenpaket gelöscht wird (vor dem weiterleiten des Datenstromes an das weitere Netzwerk) und durch zumindest ein entsprechendes Datenpaket, welches auf der zumindest einen weiteren Übertragungsstrecke übertragen und zwischengespeichert worden ist, in dem weiterzuleitenden Datenstrom an der richtigen Stelle ersetzt wird. Dabei wird davon ausgegangen, dass z. B. bei der Übertragung des Datenstromes über die erste Übertragungsstrecke aufgrund einer wie auch immer gearteten Störung Datenpakete des Datenstromes nicht in der korrekten Reihenfolge übertragen und bei den Separiermitteln ankommen. Dies hat insbesondere dann den Nachteil, wenn ein Datenpaket nicht nur in der falschen Reihenfolge, sondern auch deutlich verzögert übertragen wird, so dass es nicht mehr rechtzeitig für die Weiterleitung an das weitere Netzwerk zur Verfügung steht. Gleichzeitig ist aber davon auszugehen, dass der Datenstrom über die weitere Übertragungsstrecke in einem ausreichenden Zeitfenster dieses Datenpaket, dass bei der ersten Übertragungsstrecke deutlich verzögert übertragen wurde, rechtzeitig übertragen worden ist, so dass es nicht nur zwischengespeichert wird (in der ausreichenden Zeit), sondern auch in einer ebenfalls ausreichenden Zeit dem Zwischenspeicher entnommen und in den Datenstrom, der über die erste Übertragungsstrecke übertragen wurde, in der richtigen Reihenfolge, dass heißt an der korrekten Position, eingefügt werden kann. Dies wird zwar im Regelfall ebenfalls mit einer gewissen Zeitverzögerung erfolgen, wobei diese Zeitverzögerung jedoch nicht nur in Kauf genommen werden kann, sondern auch deutlich kleiner ist, als wenn in Folge der Zeitverzögerung bei der Übertragung des Datenstromes über die erste Übertragungsstrecke und das deutlich zu späte Ankommen eines Datenpaketes dieser Datenstrom neu sortiert werden müsste.

In Weiterbildung der Erfindung ist vorgesehen, dass für den Fall, dass auf einer Übertragungsstrecke zumindest ein Datenpaket nicht in der richtigen Reihenfolge angekommen ist, dieses nach der Zwischenspeicherung zeitversetzt in dem weiterzuleitenden Datenstrom an der richtigen Stelle ersetzt wird. Auch dies hat den Vorteil, dass zunächst abgewartet wird, bis über eine Übertragungsstrecke alle Datenpakete eines Datenstromes übertragen worden sind und analysiert wird, ob diese in der richtigen Reihenfolge angekommen sind. Während dieser Übertragungszeit werden die an de Separiermitteln ankommenden Datenpakete zwischengespeichert, so dass anschließend eine Analyse der Reihenfolge der eingegangenen Datenpakete erfolgen kann. Sollte sich dabei herausstellen, dass zumindest ein Datenpaket nicht in der richtigen Reihenfolge angekommen ist, kann es dem Zwischenspeicher entnommen werden und derart zeitversetzt in dem weiterzuleitenden Datenstrom eingesetzt werden, so dass es sich nach dem einsetzen an der richtigen Position befindet, um sicherzustellen, dass der ursprüngliche Datenstrom, der aus einer Abfolge hintereinander folgender Datenpakete in einer Sollreihenfolge besteht, fehlerfrei übertragen und an das weitere Netzwerk weitergeleitet wird.

In Weiterbildung der Erfindung erfolgt die Zwischenspeicherung nach einem vorgebbaren Kriterium, insbesondere für einen vorgegebenen Zeitraum. Dies ist von Vorteil, um die Speichergröße zu verkleinern und die Geschwindigkeit der Datenübertragung zu erhöhen. Dabei wird davon ausgegangen, dass die zu übertragenen Datenströme (dass heißt die Abfolge von hintereinander folgenden Datenpaketen) immer nur so lange gespeichert wird, wie die Bereitstellung der zwischengespeicherten Datenpakete erforderlich ist, um den weiterzuleitenden Datenstrom zu korrigieren, dass heißt fehlerhafte Datenpakete aus den zwischengespeicherten Datenpaketen zu ersetzen oder die Reihenfolge des weiterzuleitenden Datenstroms zu korrigieren. Ein weiteres Kriterium könnte die Anzahl der Datenpakete, die Summe der Größe der zwischengespeicherten Datenpakete und dergleichen sein.

In diesem Zusammenhang steht in Weiterbildung der Erfindung, dass nach Erreichen des vorgegebenen Kriteriums, vorzugsweise des Zeitraumes, die während dieses Zeitraums oder allgemein die nach dem vorgegebenen Kriterium zwischengespeicherten Datenpakete gelöscht werden. Damit steht nach Abschluss der Korrektur wieder freier Speicherplatz zu Verfügung, um einen neuen Abschnitt eines Datenstromes in dem Speicher zwischen zu speichern. Dies erhöht nicht nur die Verarbeitungsgeschwindigkeit des Speichers, sondern es wird auch wirksam vermieden, dass zwischengespeicherte Datenpakete eines übertragenen Datenstromes mit Datenpaketen des folgenden Abschnittes des Datenstromes in dem Speicher verwechselt werden. Dadurch erhöht sich in vorteilhafter Weise nicht nur die Redundanz der Datenübertragung, sondern auch die korrekte und sichere Datenübertragung, weil sich nicht die Datenpakete eines Abschnittes eines Datenstromes mit Datenpaketen eines anderen Abschnittes des Datenstromes vermischen können.

In Weiterbildung der Erfindung wird die Zwischenspeicherung in einem geeigneten Puffermechanismus, vorzugsweise als Ringspeicherung, durchgeführt. Damit steht bei der Ringspeicherung eine besonders vorteilhafte Realisierung der Zwischenspeicherung zur Verfügung, da dadurch automatisch sichergestellt wird, dass die zwischengespeicherten Datenpakete des einen Abschnittes des Datenstromes gelöscht werden, wenn neue Datenpakete eines weiteren Abschnittes des Datenstromes folgen. Andere Puffermechanismen sind jedoch genauso gut anwendbar.

Für den Fall, dass aufgrund einer wie auch immer gearteten Störung bei der Übertragung der Datenpakete über die zumindest zwei Übertragungsstrecken eine Korrektur fehlerhafter oder in der falschen Reihenfolge angekommener Datenpakete nicht, insbesondere nicht innerhalb des vorgegebenen Zeitraumes, korrigiert werden kann, ist vorgesehen, dass der Datenstrom von den Separiermitteln auf jeden Fall weitergeleitet wird, insbesondere nach Erreichen des vorgegebenen Zeitraumes. Somit wird wirksam eine Unterbrechung der Weiterleitung des Datenstromes zu dem weiteren Netzwerk unterbunden, falls das erfindungsgemäße Verfahren nicht oder nicht innerhalb des vorgebbaren Zeitraumes durchgeführt werden kann. Ein solcher Fall ist beispielsweise dann gegeben, wenn z. B. ein Datenpaket, welches über beide Übertragungsstrecken übertragen werden soll, aufgrund einer Störung fehlerhaft oder gar nicht auf beiden Übertragungsstrecken übertragen wird. In einem solchen Fall steht es auch nicht oder nur fehlerhaft bei der Zwischenspeicherung zur Verfügung, und es muss in Kauf genommen werden, dass der weiterzuleitende Datenstrom an das weitere Netzwerk in einem solchen Fall dieses zumindest eine Datenpaket nicht oder fehlerhaft enthält.

Um die durch PRP beim Einsatz auf einer Funkstrecke entstehenden Paketvertauschungen auszugleichen, werden also die empfangenen Pakete für eine bestimmte Zeit oder für ein bestimmtes Volumen zwischengespeichert, falls die Paketsequenz eines der beiden Datenströme nicht lückenlos vorliegt. Die Zwischenspeicherung wird solange fortgeführt, bis auf der langsameren Strecke das nächste fehlende Paket der schnelleren Strecke eintrifft. Dieser Mechanismus wird für alle Folgepakete fortgeführt.

Um eine deutlich verspätete Auslieferung im Falle eines Paketverlusts auf beiden Strecken zu vermeiden, kann ein Ablaufzeitfenster konfiguriert werden, nach dem ein zwischengespeicherter Paketstrom auch trotz fehlender Pakete ausgeliefert wird. So können auch zeitkritische Anwendungen mit dem Reordering-Buffer betrieben werden.

Das Dokument WO 2014/076354 A1 befindet sich auf dem technischen Gebiet redundanten Übertragungssysteme und beschreibt die Übertragung von Datenströmen über mehrere LAN Netzwerke. Das Dokument US 2014/086136 A1 beschreibt eine ähnliche Übertragung von Datenpaketen über zwei Koppelvielfachen in einer Paketvermittlungseinrichtung.

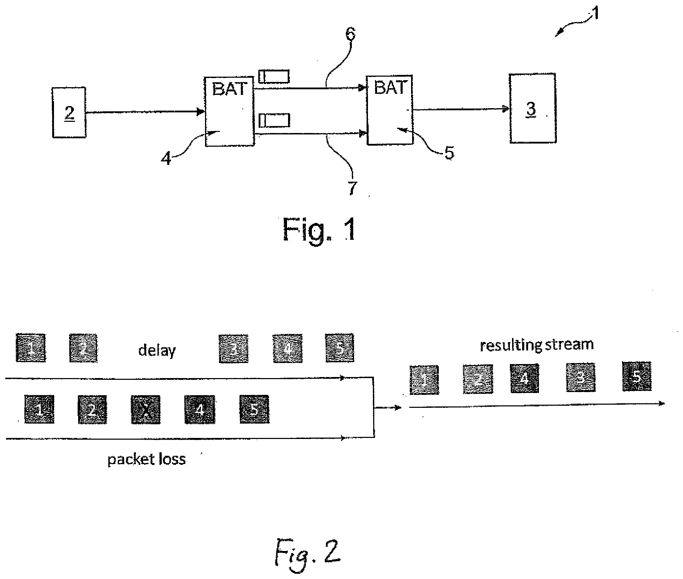

Das vorgestellte Verfahren kann auf einem Übertragungssystem, das in der Figur 1 dargestellt ist, durchgeführt werden.

Figur 1 zeigt eine prinzipielle Anordnung eines Übertragungssystems, welches zwei Netzwerke 2, 3 aufweist, die untereinander Daten austauschen sollen. Dieser Datenaustausch kann entweder unidirektional von dem Netzwerk 2 zu dem Netzwerk 3 (oder umgekehrt), genauso aber auch bidirektional zwischen den beiden Netzwerken 2, 3 erfolgen.

Bei den Netzwerken 2, 3 kann es sich um einfache oder komplexe Netzwerke, zum Beispiel in einer Ring- oder Linientopologie oder dergleichen, handeln. Es ist aber auch denkbar, dass ein solches Netzwerk 2, 3 nur ein einziges Element wie zum Beispiel einen Sensor, einen Aktor, ein Steuergerät oder dergleichen umfasst.

Um die Daten des Netzwerkes 2 zum Beispiel zu dem Netzwerk 3 zu Übertragen, sind Verdopplungsmittel 4 vorhanden. Diese Verdopplungsmittel 4 teilen den zugeführten Datenstrom in zwei Datenströme auf. Ebenso erfolgt das Zusammenführen der beiden Datenströme nach deren Empfangen über Separiermittel 5, wobei die empfangenen Datenströme nach dem Zusammenführen an das Netzwerk 3 weitergeleitet werden.

Die Übertragung der Daten zwischen den Verdopplungsmittel und den Separiermitteln 5 erfolgt über zwei gleichartige oder voneinander unterschiedliche Übertragungsstrecken 6, 7 drahtlos mittels PRP. Die Drahtlosübertragung erfolgt in vorteilhafter Weise über Funk, wobei eine optische Übertragung auch denkbar ist. Auch denkbar ist, dass die eine Übertragungsstrecke 6 eine Funkübertragungsstrecke und die zweite Übertragungsstrecke 7 eine optische Datenübertragungsstrecke ist. Sind beide Übertragungsstrecken 6, 7 zum Beispiel Funkübertragungsstrecken, können die Daten, genauer die Datenpakete, über diese beiden Funkübertragungsstrecken zum Beispiel auf gleicher Frequenz oder unterschiedlichen Frequenzen und ansonsten gleicher Parameter oder voneinander unterschiedlicher Übertragungsparameter übertragen werden. Gleichartige Übertragungsstrecken 6, 7 sind hinsichtlich ihres Aufbaues zu bevorzugen, wobei voneinander unterschiedliche Übertragungsstrecken 6, 7 (zum Beispiel optisch/Funk bzw. voneinander unterschiedliche Übertragungsparameter) hinsichtlich der Steigerung der Redundanz zu bevorzugen sind.

Nachdem die Daten von dem Erstnetzwerk 2 den Verdopplungsmitteln 4 (bei PRP auch als Redundancy Box bezeichnet) zugeführt worden sind, wird dort veranlasst, dass jedes Datenpaket mehrfach über die gleiche Übertragungsstrecke 6, 7 übertragen wird und/oder jedem Datenpaket ein Fehlerkorrekturwert zugeordnet wird. Anschließend erfolgt in entsprechender Weise die Übertragung der Datenpakete über die Übertragungsstrecken 6, 7, wobei die von den Separiermitteln 5 (im Falle von PRP auch als Redundancy Box bezeichnet) entsprechend ausgewertet, gegebenenfalls aufbereitet und als Datenpakete dem weiteren Netzwerk 3 zugeführt werden.

Die vorstehende Beschreibung der Figur 1 bezieht sich auf eine unidirektionale Datenübertragung von dem Erstnetzwerk 2 zu dem weiteren, insbesondere dem zweiten Netzwerk 3. Hierzu sind die Verdopplungsmittel 4 zum Aufteilen des Datenstromes und die Separiermittel 5 zum Zusammenführen des empfangenen Datenstromes ausgebildet.

Ist auch eine Datenübertragung von dem Netzwerk 3 zu dem Netzwerk 2 gewünscht, können weitere Verdopplungsmittel 4 bzw. Separiermittel 5 in dem Übertragungsweg zwischen dem Netzwerk 3 und dem Netzwerk 2 vorhanden sein, sodass sich ein doppelter Aufbau ergibt. Alternativ dazu können die Mittel 4, 5 auch dazu ausgebildet sein, nicht nur den zugeführten Datenstrom zu verdoppeln, sondern auch die über die Übertragungsstrecken 6, 7 zugeführten Datenströme zu separieren, was ebenso für die Separiermittel 5 gilt.

Figur 2 zeigt das bekannte nachteilige Verfahren beispielhaft für den Fall, dass auf einer Übertragungsstrecke 6 (links oben in Figur 2 der Datenstrom, bestehend aus fünf Datenpaketen) zumindest ein Datenpaket (hier die Datenpakte drei, vier und fünf) verzögert übertragen worden sind.

Auf der weiteren Übertragungsstrecke 7 (links unten in Figur 2 der Datenstrom, bestehend aus fünf Datenpaketen) ist währen der Übertragung ein Datenpaket (Datenpaket drei) verlorengegangen.

Werden diese beiden (fehlerhaften) Datenströme von den Separiermitteln 5 wieder zusammengesetzt, resultiert daraus der in Figur 2 gezeigte fehlerhafte Datenstrom mit den Datenpaketen in der falschen Reichenfolge eins, zwei, vier, drei, fünf.

Dieser fehlerhafte Datenstrom kommt bei Anwendung des erfindungsgemäßen Verfahrens nicht zustande, sondern die Datenpakete werden in vorteilhafter Weise durch die Zwischenspeicherung und Entnahme der gespeicherten Datenpakete aus dem Zwischenspeicher in die richtige Reihenfolge gebracht.

### Bezugszeichenliste

- 1.: Übertragungssystem
- 2.: Erstes Netzwerk
- 3.: Weiteres Netzwerk
- 4.: Verdopplungsmittel
- 5.: Separiermittel
- 6.: Erste Übertragungsstrecke
- 7.: Zweite Übertragungsstrecke

## Patentansprüche

1. Verfahren zum Betreiben eines Übertragungssystems (1), das ein erstes Netzwerk (2) und zumindest ein weiteres Netzwerk (3) aufweist, wobei zwischen diesen zumindest zwei Netzwerken (2, 3) dadurch Daten ausgetauscht werden, dass Daten des ersten Netzwerkes (2) als Datenpakete Verdopplungsmitteln (4) zugeführt werden, wobei die zugeführten Datenpakete über zumindest zwei Übertragungsstrecken (6, 7) drahtlos mittels Parallel Redundancy Protocol zu Separiermitteln (5) übertragen und von den Separiermitteln (5) als Datenstrom an das angeschlossene weitere Netzwerk (3) weitergeleitet werden, **dadurch gekennzeichnet, dass** die Datenpakete nach ihrer Übertragung über die zumindest zwei Übertragungsstrecken (6, 7) in einem Speicher zwischengespeichert werden, wobei für den Fall, dass auf einer Übertragungsstrecke (6) zumindest ein Datenpaket verlorengegangen ist, zumindest ein entsprechendes Datenpaket, welches fehlerfrei auf der zumindest einen weiteren Übertragungsstrecke (7) übertragen und zwischengespeichert worden ist, dieses zumindest eine verloren gegangene Datenpaket in dem weiter zu leitenden Datenstrom ersetzt und wobei für den Fall, dass auf einer Übertragungsstrecke (6, 7) zumindest ein Datenpaket nicht in der richtigen Reihenfolge angekommen ist, entweder dieses zumindest eine in der falschen Reihenfolge übertragene Datenpaket gelöscht wird und durch zumindest ein entsprechendes Datenpaket, welches auf der zumindest einen weiteren Übertragungsstrecke (7) übertragen und zwischengespeichert worden ist, in dem weiter zu leitenden Datenstrom an der richtigen Stelle ersetzt wird oder dieses nach der Zwischenspeicherung zeitversetzt in dem weiter zu leitenden Datenstrom an der richtigen Stelle ersetzt wird.

2. Verfahren nach einem der vorhergehenden Ansprüche, **dadurch gekennzeichnet, dass** die Zwischenspeicherung nach einem vorgebbaren Kriterium, insbesondere für einen vorgegebenen Zeitraum, erfolgt.

3. Verfahren nach Anspruch 2, **dadurch gekennzeichnet, dass** nach Erreichen des vorgegebenen Kriteriums, insbesondere des vorgegebenen Zeitraumes, die zwischengespeicherten Datenpakete gelöscht werden.

4. Verfahren nach Anspruch 2 oder 3, **dadurch gekennzeichnet, dass** nach Erreichen des vorgebbaren Kriteriums, insbesondere des vorgegebenen Zeitraumes, der Datenstrom auf jeden Fall weitergeleitet wird.

5. Verfahren nach einem der vorhergehenden Ansprüche, **dadurch gekennzeichnet, dass** die Zwischenspeicherung in einem geeigneten Puffermechanismus, insbesondere in einer Ringspeicherung, durchgeführt wird.

## Claims

1. Method for operating a transmission system (1) having a first network (2) and at least one further network (3), wherein data are interchanged between these at least two networks (2, 3) by supplying data from the first network (2) as data packets to duplication means (4), wherein the supplied data packets are wirelessly transmitted by means of a parallel redundancy protocol to separating means (5) via at least two transmission paths (6, 7) and are forwarded from the separating means (5) to the connected further network (3) as a data stream, **characterized in that** the data packets are buffered in a memory after being transmitted via the at least two transmission paths (6, 7), wherein, if at least one data packet has been lost on one transmission path (6), at least one corresponding data packet, which has been transmitted in an error-free manner on the at least one further transmission path (7) and has been buffered, replaces this at least one last data packet in the data stream to be forwarded, and wherein, if at least one data packet has not arrived in the correct order on one transmission path (6, 7), either this at least one data packet transmitted in the wrong order is deleted or is replaced with at least one corresponding data packet, which has been transmitted on the at least one further transmission pan (7) and has been buffered, at the correct position in the data stream to be forwarded or is replaced at the correct position in the data stream to be forwarded with a time delay after buffering.

2. Method according to one of the preceding claims, **characterized in that** the buffering is carried out according to a predefinable criterion, in particular for a predefined period.

3. Method according to Claim 2, **characterized in that** the buffered data packets are deleted after the predefined criterion, in particular the predefined period, has been reached.

4. Method according to Claim 2 or 3, **characterized in that** the data stream is forwarded in any case after the predefinable criterion, in particular the predefined period, has been reached.

5. Method according to one of the preceding claims, **characterized in that** the buffering is carried out in a suitable buffering mechanism, in particular ring storage.

## Revendications

1. Procédé permettant de faire fonctionner un système de transmission (1) qui présente un premier réseau (2) et au moins un autre réseau (3), des données étant échangées entre ces au moins deux réseaux (2, 3) en ce que des données du premier réseau (2) sont amenées sous forme de paquets de données à des moyens de doublement (4), dans lequel les paquets de données amenés sont transmis sans fil par au moins deux voies de transmission (6, 7) au moyen d'un protocole de redondance parallèle à des moyens de séparation (5) et sont retransmis par les moyens de séparation (5) sous forme de flux de données à l'autre réseau (3) connecté,
**caractérisé en ce qu'**après leur transmission par les au moins deux voies de transmission (6, 7), les paquets de données sont mis en mémoire tampon dans une mémoire,
dans lequel, au cas où au moins un paquet de données serait perdu sur une voie de transmission (6), au moins un paquet de données correspondant, qui a été transmis sans erreur sur ladite au moins une autre voie de transmission (7) et mis en mémoire tampon, remplace ledit au moins un paquet de données perdu dans le flux de données à retransmettre,
et dans lequel, au cas où au moins un paquet de données ne serait pas arrivé dans l'ordre correct sur une voie de transmission (6, 7), soit ledit au moins un paquet de données transmis dans un ordre incorrect est supprimé et remplacé à l'endroit correct par au moins un paquet de données correspondant, qui a été transmis sur ladite au moins une autre voie de transmission (7) et mis en mémoire tampon, dans le flux de données à retransmettre, soit celui-ci est remplacé en différé, après la mise en mémoire tampon, à l'endroit correct dans le flux de données à retransmettre.

2. Procédé selon l'une quelconque des revendications précédentes, **caractérisé en ce que** la mise en mémoire tampon est effectuée selon un critère prédéfinissable, en particulier pendant une période prédéfinie.

3. Procédé selon la revendication 2, **caractérisé en ce qu'**après réalisation du critère prédéfini, en particulier de la période prédéfinie, les paquets de données mis en mémoire tampon sont supprimés.

4. Procédé selon la revendication 2 ou 3, **caractérisé en ce qu'**après réalisation du critère prédéfinissable, en particulier de la période prédéfinie, le flux de données et retransmis de toute façon.

5. Procédé selon l'une quelconque des revendications précédentes, **caractérisé en ce que** la mise en mémoire tampon est effectuée dans un mécanisme tampon adapté, en particulier dans une mémoire annulaire.
